# EUROPEAN PATENT APPLICATION

(11) **EP 4 349 660 A1**
(43) Date of publication of application: **10.04.2024**
(21) Application number: 23782127.7
(22) Date of filing: 12.07.2023
(51) Int. Cl.: B60R 19/40, B60R 19/20, B60R 19/02, B60R 19/00

(54) **VEHICLE COLLISION SHOCK ATTENUATION DEVICE**

(30) Priority: 11.08.2022 KR 20220100296
(71) Applicant: Jeon, Gwang Seok, Yongin-si, Gyeonggi-do 17038 (KR)
(72) Inventor: JEON, Woo Young, Gyeonggi-do 17038 (KR) (KR)
(74) Representative: M. Zardi & Co S.A.
(86) International application number: PCT/KR2023/009922
(87) International publication number: WO 2024/034880

(57) **Abstract**

The present invention provides an impact attenuation apparatus mounted as a module on a frame of a vehicle, the impact attenuation apparatus including: a speed sensor configured to detect the driving speed of the vehicle; a distance sensor configured to measure the distance between the vehicle and an object in front of or behind the vehicle; a collision detection and determination unit configured to determine the possibility of collision between the vehicle and the object based on information about the driving speed of the vehicle and the distance to the object; a buffer cylinder, a piston installed to be movable inside the buffer cylinder and connected to a bumper for shock absorption at the front thereof; and a gas generator installed inside the buffer cylinder at a position adj acent to the head of the piston in the rear of the buffer cylinder.

## Description

### Technical Field

The present invention relates to a vehicle collision impact attenuation apparatus.

### Background Art

The number of cars driven around the world is countless, the number of people killed or injured due to car collisions or rear-end collisions while driving is also enormous, and the economic loss caused by damage to cars due to these collisions is also truly incalculable.

Airbags are direct devices for preventing human and material accidents caused by car collisions, but these have limitations in preventing human and material damage, and are especially ineffective in preventing material loss (vehicle damage).

Recently, in orderto prevent damage from car collisions, many vehicles are equipped with a software safety system that automatically maintains the distance from a forward car or stops a vehicle to avoid collision. Such a collision safety system will be essential in the future era of autonomous vehicle driving. However, despite the provision of such collision safety systems, collision accidents occur due to erroneous operation and the occurrence of errors in the systems. Furthermore, when a driver and passengers are distracted by trusting a self-driving car and the above software safety system erroneously operates or errors occur so that a car collides without being able to decelerate, damage can be fatal. Therefore, when a vehicle collision attenuation device proposed in the present invention is installed, this problem may be solved and the damage from human and material accidents caused by automobile collisions may be significantly reduced.

There are many patent applications for front bumpers and airbags intended to prevent disasters caused by car collisions or rear-end collisions.

Korean Patent No. 10-1491309 (applicant: Hyundai Motor Company/registration date: February 2, 2015) relates to an exterior airbag for vehicles, and discloses an external airbag for a vehicle including an energy absorber that is disposed in the deployment direction of an airbag disposed in front of a bumper back beam, is formed to cover the airbag, and is separated into upper and lower parts by the deployment force of the airbag so that the front thereof is opened. However, the airbag is made of cloth, so that it is insufficient to absorb a large impact resulting from a large accident or collision with a large vehicle despite its inflation.

Korean Patent No. 10-2295215 (applicant: LX Hausys Co., Ltd./registration date: August 24, 2021) discloses a bumper for a vehicle having a collision guide structure that is configured to include a front bumper provided with a bracket coupling portion extending from the inside toward the vehicle body, and a front end bracket positioned to face the inside of the front bumper and provided with a bumper coupling portion corresponding to the bracket coupling portion, so that in the event of a frontal collision of a vehicle, the front bumper is guided and moved against specific collision force or higher and is damped by friction force. However, this patent regulates the movement of the front bumper to protect the legs of pedestrians against collision, so there is a limitation in terms of the protection of a driving vehicle or a driver.

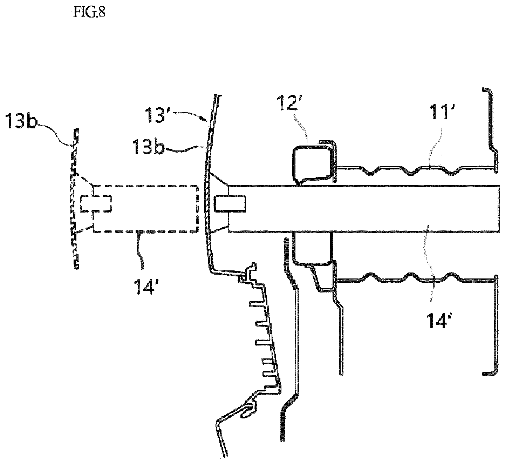

Korean Patent No. 10-1326925 (applicant: Hyundai Motor Company/registration date: November 1, 2013) discloses a vehicle shock absorbing apparatus including a side frame 11', a back beam 12, a bumper 13, and a movable shaft 14, wherein a movable bumper 13b protruding forward comes into contact with an obstacle first before the vehicle body directly hits the obstacle in the case of a low-speed collision, as shown in FIG. 8. The low-speed collision assumes that a collision is made with a stationary large commercial vehicle or structure. However, it is difficult to fully protect a vehicle because the movable portion of the bumper 13' is moved forward after the occurrence of a collision, and there is a disadvantage in that the moving force of the bumper 13 is weak because the movable shaft 14 is rotated by a link mechanism.

In order to prevent accidents caused by car collisions, it is desirable for safety devices to be activated before the occurrence of an actual collision. What is important in predicting a car accident is the speed of a car and the distance to an object or vehicle around the car, especially a forward object or vehicle. In connection with this, Korean Patent No. 10-2198466 (Applicant: Pusan National University Industry-Academic Cooperation Foundation/Registration date: December 29, 2020) discloses a technology that determines the possibility of collision based on the speed of a vehicle and the distance to an external object and prolongs the collision time or delays the time of collision in a third stage in which the possibility of collision is highest. This patent discloses a structure that prolongs the collision time, and discloses a technology in which a front bumper 510 at the front of a car body 500' protrudes forward due to the operation of a hydraulic spring 520, as shown in FIG. 9. However, this patent does not disclose the details of the structure of the bumper 510 as well as the operation of the hydraulic spring 520, so that it only provides an abstract idea.

### Disclosure

### Technical Problem

Therefore, an object of the present invention is to detect a car collision, and a collision-attenuating compression bumper or guard protrudes in advance to sufficiently attenuate strong impact, thereby significantly reducing material loss such as vehicle damage, and correspondingly, reducing deaths and injuries as well, thereby contributing to the loss prevention and safety of humans against automobile accidents.

### Technical Solution

In order to accomplish the above object, the present invention provides an impact attenuation apparatus mounted as a module on a frame of a vehicle, the impact attenuation apparatus including: a speed sensor configured to detect the driving speed of the vehicle; a distance sensor configured to measure the distance between the vehicle and an object in front of or behind the vehicle; a collision detection and determination unit configured to determine the possibility of collision between the vehicle and the object based on information about the driving speed of the vehicle and the distance to the object; a buffer cylinder, a piston installed to be movable inside the buffer cylinder and connected to a bumper for shock absorption at the front thereof; and a gas generator installed inside the buffer cylinder at a position adjacent to the head of the piston in the rear of the buffer cylinder.

The gas generator may include gunpowder and generate moving force intended to push the piston through the explosion of the gunpowder.

The bumper may be any one of a front bumper, a hybrid bumper configured such that it forms a portion of the front bumper and only a portion connected to the piston moves, and a separate guard configured to cover the front or rear of the front bumper.

The exterior of the buffer cylinder may be formed of a long circular casing that is closed at one end and open at the other end, a piston pivot configured to guide the piston through its movement may be installed around the open inlet of the buffer cylinder, a plurality of pinholes may be formed in the range from the center of the casing to the inlet, and a leak valve may be installed in the closed portion.

The pinholes may assist the movement of the piston by discharging air inside the buffer cylinder when the piston begins to move, may sequentially reduce the pressure of explosive gas immediately before the piston reaches a top dead center, which is a maximum forward movement distance, and may attenuate impact by performing damping so that the pressure of the explosive gas inside the buffer cylinder is sequentially lowered when the piston receives the impact of a vehicle collision and is pushed into a vehicle body.

The piston may include the head having a large diameter and a rod extending long from the head, a compression ring, a guide, and a buffer spring may be mounted in the head sequentially from a position close to the closed portion of the buffer cylinder, the buffer spring may protect the buffer cylinder from damage when the piston is moved rapidly by the pressure of explosive gas, and the piston compression ring may increase airtightness to prevent explosive gas generated inside the buffer cylinder from escaping.

The collision detection and determination unit may include braking distance information in memory to accurately determine the possibility of collision with a forward or rearward object, and may determine the possibility of collision by taking into consideration the relative speed between the vehicle and the object or a change rate in the relative speed when the object is a moving object.

### Advantageous Effects

According to the present invention, there is achieved the effect of providing a car collision impact attenuation apparatus that may considerably reduce the loss of life and property by significantly reducing the impact of a car collision, may be applied to all types of cars, and may provide a mechanism capable of guaranteeing reliable operation and performance, thereby having high economic value through groundbreaking advancements in automobile safety and the prevention and reduction of human and material accidents.

### Description of Drawings

FIG. 1 is a diagram showing the overall configuration of an automobile collision impact attenuation of the present invention;
FIG. 2 shows a situation in which the collision detection and determination unit of the present invention determines that there is the possibility of a collision and pistons are moved forward of the vehicle by the operation of gas generators, so that a bumper protrudes from its original position;
FIG. 3 is a sectional view of the buffer cylinder of the present invention;
FIG. 4 is a sectional view of the piston of the present invention;
FIG. 5 is a plan view of the bumper of the present invention;
FIGS. 6 and 7 are diagrams showing the operation of the impact attenuation apparatus of the present invention described above, wherein FIG. 6 shows a state before the operation and FIG. 7 shows a state in which pistons reach their top dead center after the operation;
FIG. 8 is a diagram showing a shock absorber for a vehicle according to a preceding patent; and

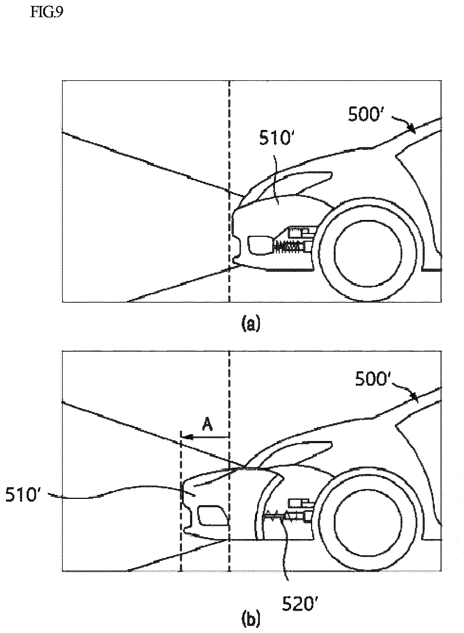

FIG. 9 is a diagram showing a shock absorber for a vehicle according to another preceding patent.

### Mode for Invention

Preferred embodiments of the present invention will be described below with reference to the accompanying drawings.

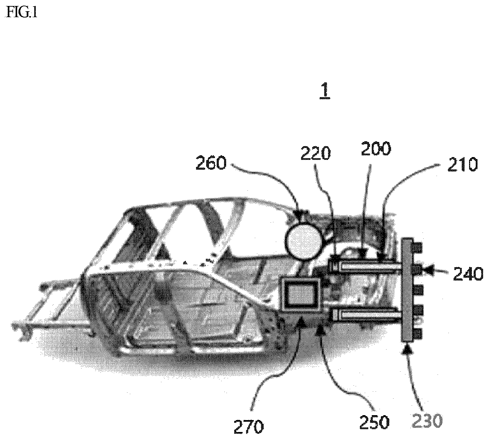

FIG. 1 is a diagram showing the overall configuration of an automobile collision impact attenuation apparatus (hereinafter referred to as the "impact attenuation apparatus)" of the present invention. For convenience of understanding, an impact absorption module is shown as being mounted on the basic frame 250 of a car. The frame 250 is designed to be mounted with an impact attenuation apparatus 1. The impact attenuation apparatus 1 is mounted using a different size and strength depending on the type of vehicle and the weight of the vehicle. The impact attenuation apparatus 1 of the present invention can be applied to a passenger car, a truck, a bus, etc. regardless of the type of vehicle.

The impact attenuation apparatus 1 of the present invention includes a speed sensor 260, a collision detection and determination unit 270, gas generators 220, buffer cylinders 200 and pistons 210, a bumper 230, and a distance sensor 240.

The speed sensor 260 is a sensor that detects the speed of a vehicle in motion. A speed sensor already installed in the vehicle may be used as the speed sensor 260. The location at which the speed sensor 260 is mounted may be a shaft that rotates the wheels of the vehicle rather than a windshield glass as shown in the drawings.

In the present invention, the distance sensor 240 is preferably attached to the front of the bumper 230, i.e., the forefront of the vehicle, as shown in the drawings. The reason for this is to accurately detect the distance to an obstacle in front of the vehicle, e.g., in centimeters. The distance sensor 240 may be an ultrasonic sensor or a vision sensor that recognizes images.

Although an existing front bumper may be used as the bumper 230 to which the distance sensor 240 is attached, it is preferable that the bumper is not permanently fixed to a side frame or back beam to enable forward movement. Otherwise, there is a concern that despite the movement of the pistons 210, the bumper 230 may be deformed or damaged while resisting moving force.

Since the bumper 230 in the present invention is used to absorb impact to the vehicle, it does not necessarily have to have the same shape or material as an existing front bumper. For example, the bumper 230 may be fabricated in various structures, such as a hybrid bumper which forms portions of a front bumper and in which only the portions that are connected to the pistons 210 move, or a separate plate which covers the front of an existing front bumper and which is fabricated and used as the "bumper" of the present invention. In this respect, the "bumper" of the present invention should be interpreted in the broadest possible sense as a member that has the meaning of a guard.

The bumper 230 has to be fabricated to have a strength and structure that can sufficiently withstand the impact upon the collision of the vehicle.

The buffer cylinders 200 extend linearly from the rear of the bumper 230 to points surrounding the gas generators 220.

Although the gas generators 220 are installed inside the front body of the car, they are not installed independently and are installed inside casings formed in the rears of the buffer cylinders 200. The gas generator 220 may include, e.g., gunpowder.

The pistons 210 are installed to be movable inside the buffer cylinders 200.

The collision detection and determination unit 270 includes an electronic control unit (ECU) and memory. The collision detection and determination unit 270 determines the possibility of a collision with a forward obstacle based on the speed information of the speed sensor 260 and the distance information of the distance sensor 240, and ignites, e.g., gunpowder to explode by operating the gas generators 220 when it is determined that the possibility is positive.

The collision detection and determination unit 270 may include braking distance information in the memory to accurately determine the possibility of collision with a forward obstacle. Even when driving at high speeds, the vehicle may not collide with a forward object depending on whether a brake is stepped on and the degree to which the brake is stepped on. The braking distance information is the distance traveled by the vehicle when the driver steps on a brake pedal to the maximum at the current speed, and is different for each vehicle type. When a forward object is a stationary object, the possibility of collision may be accurately determined by taking into consideration three variables: speed information, distance information, and braking distance information.

In addition, the collision detection and determination unit 270 of the present invention may further take into consideration the relative speed between a target vehicle and another vehicle as a factor in determining the possibility of collision by considering the case where a forward object is a moving object such as another vehicle that is traveling. The reason for this is that even when two vehicles are traveling close to each other at high speeds, the possibility that an accident occurs is low when they continue to travel in this state. When the distance is shortened as the relative speed suddenly decreases or the distance is shortened as the change rate in relative speed suddenly increases, the possibility of a collision may be accurately determined by incorporating the above-described braking distance information.

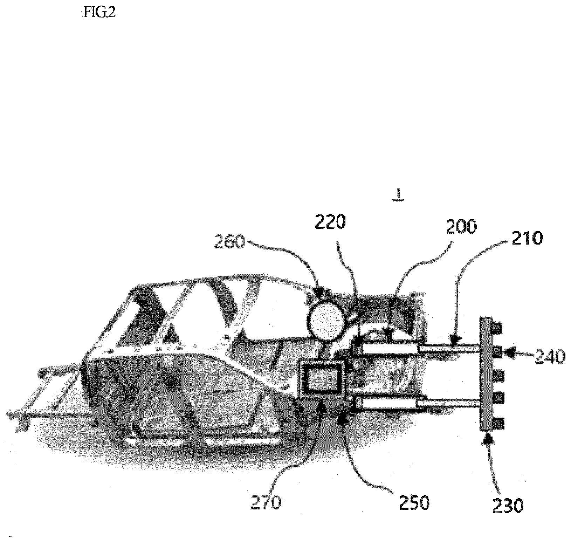

FIG. 2 shows a situation in which the collision detection and determination unit 270 of the present invention determines that there is the possibility of a collision and the pistons 210 are moved forward of the vehicle by the operation of the gas generators 220, so that the bumper 230 protrudes from its original position.

The distance over which the bumper 230 is moved forward may vary depending on the type of vehicle. For example, the distance is preferably 500 to 700 mm for passenger cars and small trucks, and preferably 700 to 1,200 mm for large trucks and buses. As described above, the bumper 230 may be fabricated as a guard rather than an existing front bumper. In this case, the front bumper does not move at all and the guard moves to absorb impact.

The gas generators 220 and pistons 210 of the buffer cylinders 200 are arranged in pairs, one on the left and one on the right with respect to the front of the bumper 230. Accordingly, both sides of the bumper 230 are pushed with the same force at the same time to move the bumper 230 in a balanced manner. However, the number of members that are arranged is not limited, and there may be made various modifications, such as a case where four members are arranged on both the left and right sides or a case where one member is arranged at the center of the bumper 230 when the explosive power of the gunpowder is strong.

Next, the individual physical members of the impact attenuation apparatus 1 of the present invention will be described.

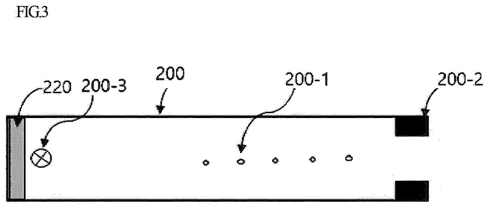

FIG. 3 is a longitudinal sectional view of the buffer cylinder 200. The buffer cylinder 200 has an external appearance composed of a long circular casing that is closed at one end (on the inside of the vehicle) and open at the other end. The gas generator 220 is installed on the closed casing side. When an explosive is used, an ignition device that performs ignition through the operation of the collision detection and determination unit 270 may be further included.

A piston pivot 200-2 is installed while surrounding the open inlet of the buffer cylinder 200 to guide the movement of the piston 210. A plurality of pinholes 200-1 are formed in the range from a position near the center of the casing to a position adj acent to the inlet, and a leak valve 200-3 is installed in the closed portion of the casing. The buffer cylinder 200 has to be securely fixed to the vehicle frame 250 because it maintains its position regardless of the collision of the vehicle.

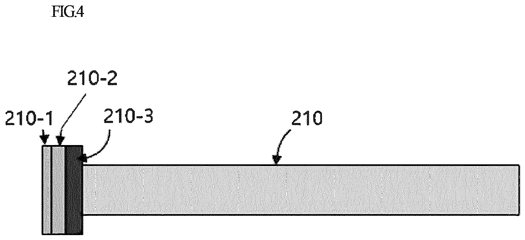

FIG. 4 is a longitudinal-sectional view of the piston 210. The piston 210 is mounted to slide along the inside of the buffer cylinder 200.

The piston 210 includes a head having a large diameter and a rod extending long from the head. A compression ring 210-1, a guide 210-2, and a buffer spring 210-3 are mounted in the head sequentially from a position close to the closed portion of the buffer cylinder 200. The front end of the rod of the piston 210 is connected and fixed to the bumper 230.

In the above-described structure, the size and number of pinholes 200-1 may be changed depending on the type of vehicle or the weight of the vehicle. When the piston 210 and the bumper 230 fixed thereto are rapidly moved forward at a very high speed due to the pressure of the explosion of the gunpowder in the gas generator 220, the pinholes 200-1 serve to discharge air from the inside of the buffer cylinder 200 while the piston 210 is moving and help push the piston 210 more rapidly. In this case, the internal air is initially discharged through the pinhole 200-1 because it is the air that originally remained inside the buffer cylinder 200 and thus there is a concern that it interferes with the movement of the piston 210.

In addition, immediately before the piston 210 reaches a top dead center, which is the maximum forward movement distance, the pressure of the explosive gas is sequentially reduced by the pinholes 200-1. Accordingly, when the piston 210 receives impact when the vehicle collides and is pushed backward (toward the inside of the car body), the pinholes 200-1 serve to gently relieve the impact by damping the pressure of the explosive gas inside the buffer cylinder 200 to sequentially lower it. In order to perform this function, the pinholes 200-1 are preferably installed to be biased toward the open portion of the buffer cylinder 200 as described above.

The buffer spring 210-3 of the piston 210 serves to prevent the buffer cylinder 200 from being damaged by the impact caused by the piston 210 that is moved rapidly due to the pressure of the explosive gas.

The guide 210-2 serves as a stopper that stops the piston 210 at the top dead center when the piston 210 is moved by the pressure of the explosive gas, and at the same time serves as a guide when the piston 210 reciprocates inside the cylinder. Furthermore, the guide 210-2 serves to maintain smooth operation by reducing a frictional area between the piston 210 and the front of the inside of the buffer cylinder 200.

The piston compression ring 210-1 serves to rapidly and strongly push the piston 210 by increasing airtightness to prevent the explosive gas generated inside the buffer cylinder 200 from escaping. The piston compression ring 210-1 serves to compress residual gas inside the buffer cylinder 200 to maintain airtightness when the vehicle collides and the piston is pushed backward.

The leak valve 200-3 is used to discharge residual explosive gas inside the buffer cylinder 200 when the piston 210 and bumper 230that have been moved forward after the impact attenuation apparatus 1 has operated are restored.

Therefore, it can be seen that it is a reasonable arrangement to install the compression ring 210-1, the guide 210-2, and the buffer spring 210-3, which first comes into contact with the piston pivot 200-2 of the buffer cylinder when the piston 210 is moved, sequentially from a position adj acent to the closed portion of the buffer cylinder 200.

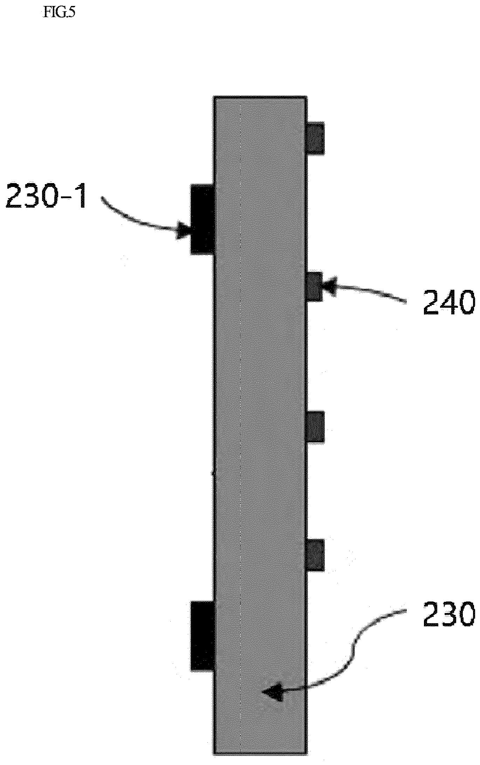

FIG. 5 is a plan view of the bumper 230.

A piston connector 230-1 is formed at a place in contact with the front end of each of the pistons 210 on the rear surface of the bumper 230 in order to accommodate the front of the piston 210. The piston connector 230-1 may be formed of a buffer pad or a socket having a concave portion. The distance sensor 240 is mounted on the front of the bumper 230. When multiple distance sensors 240 are installed, not only the distance to an object at the center of a forward area but also the distance to an object on a side of the forward area may be accurately measured.

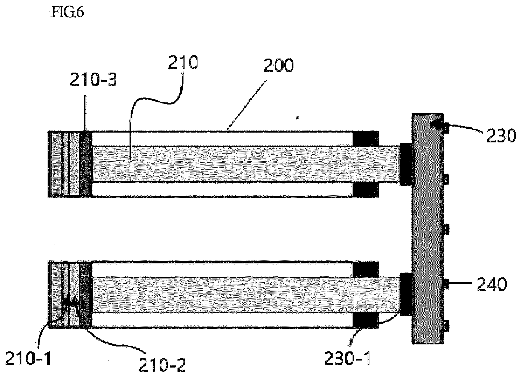

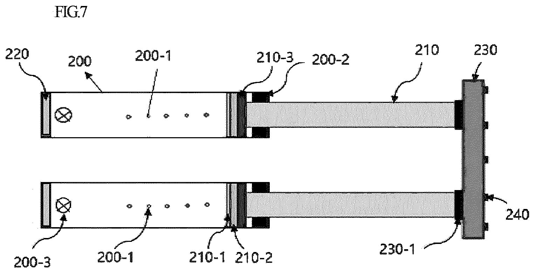

FIGS. 6 and 7 are diagrams showing the operation of the impact attenuation apparatus 1 of the present invention described above.

As shown in FIG. 6, before the impact attenuation apparatus 1 operates, the piston compression rings 210-1 are adjacent to or in contact with the gas generators 220 in the rear ends of the pistons 210, and the front ends of the pistons 210 are connected and remain fixed to the bumper 230. The piston guides 210-2 support the outer surfaces of the pistons 210, and the guides 210-2 and the buffer springs 210-3 are fixed to the heads of the pistons 210 and are located in contact with the inner surfaces of the buffer cylinders 200.

As shown in FIG. 7, at the top dead center where the piston 210 is maximally moved forward and positioned after impact attenuation apparatus 1 has operated, the rear ends of the pistons 210 are moved forward to the open entrances of the buffer cylinders 200. The pistons 210 are moved forward at a high speed while maintaining a stable support state by means of the buffer springs 210-3, the guides 210-2, and the piston pivots 200-2 and push the bumper 230. In the case where the bumper 230 collides with a forward object and absorbs impact force, when the pistons 210 receive force pushing backward as described above, the pressure of the explosive gas inside the buffer cylinder 200 is sequentially lowered by the pinholes 200-1 and thus impact is gently relieved by damping.

Therefore, according to the present invention, it may be possible to implement a mechanism that dramatically reduces the impact of a car collision and ensures reliable operation and performance.

Although the preferred embodiment of the present invention has been described above, various changes and modifications may be made to the present invention.

For example, the above description focuses on the front of the vehicle, but the same impact attenuation apparatus 1 may also be installed at the rear of the vehicle. In this case, a partially modified rear bumper or a separate guard will take the place of the bumper 230.

It is obvious that the range of rights of the present invention extends to the scope that is the same as or equivalent to the claims described below.

## Claims

1. An impact attenuation apparatus mounted as a module on a frame of a vehicle, the impact attenuation apparatus comprising:
a speed sensor configured to detect a driving speed of the vehicle;
a distance sensor configured to measure a distance between the vehicle and an object in front of or behind the vehicle;
a collision detection and determination unit configured to determine a possibility of collision between the vehicle and the object based on information about the driving speed of the vehicle and the distance to the object,
a buffer cylinder,
a piston installed to be movable inside the buffer cylinder and connected to a bumper for shock absorption at a front thereof; and
a gas generator installed inside the buffer cylinder at a position adjacent to a head of the piston in a rear of the buffer cylinder.

2. The impact attenuation apparatus of claim 1, wherein the gas generator comprises gunpowder and generates moving force intended to push the piston through an explosion of the gunpowder.

3. The impact attenuation apparatus of claim 1, wherein the bumper is any one of a front bumper, a hybrid bumper configured such that it forms a portion of the front bumper and only a portion connected to the piston moves, and a separate guard configured to cover a front or rear of the front bumper.

4. The impact attenuation apparatus of claim 3, wherein an exterior of the buffer cylinder is formed of a long circular casing that is closed at one end and open at a remaining end, a piston pivot configured to guide the piston through its movement is installed around an open inlet of the buffer cylinder, a plurality of pinholes are formed in a range from a center of the casing to the inlet, and a leak valve is installed in a closed portion.

5. The impact attenuation apparatus of claim 4, wherein the pinholes assist the movement of the piston by discharging air inside the buffer cylinder when the piston begins to move, sequentially reduce a pressure of explosive gas immediately before the piston reaches a top dead center, which is a maximum forward movement distance, and attenuate impact by performing damping so that the pressure of the explosive gas inside the buffer cylinder is sequentially lowered when the piston receives an impact of a vehicle collision and is pushed into a vehicle body.

6. The impact attenuation apparatus of claim 5, wherein the piston includes the head having a large diameter and a rod extending long from the head, a compression ring, a guide, and a buffer spring are mounted in the head sequentially from a position close to the closed portion of the buffer cylinder, the buffer spring protects the buffer cylinder from damage when the piston is moved rapidly by a pressure of explosive gas, and the piston compression ring increases airtightness to prevent explosive gas generated inside the buffer cylinder from escaping.

7. The impact attenuation apparatus of claim 3, wherein the collision detection and determination unit includes braking distance information in memory to accurately determine the possibility of collision with a forward or rearward object, and determines the possibility of collision by taking into consideration a relative speed between the vehicle and the object or a change rate in the relative speed when the object is a moving object.
